# EUROPEAN PATENT APPLICATION

(11) **EP 3 920 260 A1**
(43) Date of publication of application: **08.12.2021**
(21) Application number: 20749644.9
(22) Date of filing: 22.01.2020
(51) Int. Cl.: H01M 2/10, H01M 2/12

(54) **STORAGE BATTERY MODULE**

(30) Priority: 31.01.2019 JP 2019015760
(71) Applicant: Panasonic Intellectual Property Management Co., Ltd., Osaka-shi, Osaka 540-6207 (JP)
(72) Inventor: TOYA, Shoichi, Osaka-shi, Osaka 540-6207 (JP); NAKASHIMA, Takeshi, Osaka-shi, Osaka 540-6207 (JP); DONG Ze, Hai, Osaka-shi, Osaka 540-6207 (JP)
(74) Representative: Appelt, Christian W.
(86) International application number: PCT/JP2020/002016
(87) International publication number: WO 2020/158522

(57) **Abstract**

An inner case 220 houses a plurality of storage battery cells 210. An outer case 100 houses the inner case 220. A first inner discharge port 260a is provided in the inner case 220, and an outer discharge port is provided in a lower case 500. A first discharge path from a first position at the first inner discharge port 260a to a second position and a second discharge path from the second position to a third position at the outer discharge port are provided in a space between the inner case 220 and the outer case 100.

## Description

### [TECHNICAL FIELD]

The present disclosure relates to storage battery modules and, more particularly, to a storage battery module that houses a plurality of storage battery cells.

### [BACKGROUND ART]

High-capacity, high-voltage, high-output, and high-safety battery packs are in demand. When a battery is placed in an abnormal condition, and a high-temperature flammable gas is consequently emitted from inside, the housing of the battery pack that houses battery may be damaged, melted, or overheated, or the emitted flammable gas may be leaked outside the battery pack. Moreover, the heat generated by the flammable gas may cause adjacent batteries to be at a high temperature successively, with result that all batteries in the battery pack may become abnormal, or the housing of the battery pack may be melted by the heat. To prevent this, the battery pack is provided with an opening for discharging the flammable gas outside (see, for example, Patent Literature 1).

[Patent Literature 1] JP2009-135088

### [SUMMARY OF INVENTION]

### [TECHNICAL PROBLEM]

When the size of the battery pack is reduced, the distance between the battery emitting the flammable gas and the opening becomes short. As a result, the high-temperature high-pressure gas is discharged outside from the opening of the battery pack.

The present disclosure addresses the above-described issue, and a general purpose thereof is to provide a technology for inhibiting the high-temperature high-pressure gas emitted from a battery undergoing thermal runaway from being discharged outside.

### [SOLUTION TO PROBLEM]

A storage battery module according to an embodiment of the present disclosure includes: a plurality of storage battery cells; an inner case that houses the plurality of storage battery cells; and an outer case that houses the inner case. An inner discharge port is provided in the inner case, an outer discharge port is provided in the outer case, and a first discharge path from a first position at the inner discharge port to a second position and a second discharge path from the second position to a third position at the outer discharge port are provided in a space between the inner case and the outer case.

### [ADVANTAGEOUS EFFECTS OF INVENTION]

According to the present disclosure, the high-temperature high-pressure gas emitted from a battery undergoing thermal runaway is inhibited from being discharged outside.

### [BRIEF DESCRIPTION OF DRAWINGS]

Figs. 1A-1D are perspective views showing a structure of a storage battery module according to embodiment 1;
Fig. 2 is an exploded perspective view showing a structure of the storage battery module of Figs. 1A-1D;
Fig. 3 is a cross-sectional view showing a structure of the storage battery module of Figs. 1A-1D;
Fig. 4 is another partial perspective view showing a structure of the storage battery module of Figs. 1A-1D;
Fig. 5 is another cross-sectional view showing a structure of the storage battery module of Figs. 1A-1D;
Figs. 6A-6B are perspective views showing a structure of a storage battery module according to embodiment 2;
Figs. 7A-7D are further perspective views showing a structure of the storage battery module of Figs. 6A-6B;
Figs. 8A-8B show a discharge path of the high-temperature high-pressure gas in the storage battery module of Figs. 6A-6B; and
Figs. 9A-9D are perspective views showing a structure of a storage battery module according to embodiment 3.

### [DESCRIPTION OF EMBODIMENTS]

### (Embodiment 1)

A summary of embodiment 1 will be given before describing the embodiments of the present disclosure in specific details. This embodiment relates to a storage battery module in which a plurality of storage battery cells are housed. In the case the storage battery is a lithium ion secondary battery, a gas is generated in the storage battery cell in the event that an internal short-circuit occurs. Generation of the gas increases the pressure in the storage battery cell, but the safety mechanism discharges the gas from the anode side outside the storage battery cell. The gas in this case is at a high temperature and a high pressure so that combustion induced by the gas causes other storage battery cells in the storage battery module to undergo thermal runaway (catch fire). The spread of fire may burn the entirety of the storage battery module or the entire product. To inhibit combustion induced by the gas, it is effective to provide a discharge port in the storage battery module to discharge the gas out of the storage battery module from the discharge port. However, downsizing of a storage battery module reduces a distance between each storage battery cell and the discharge port. As a result, the high-temperature high-pressure gas would be discharged directly from the discharge port, creating a dangerous situation outside.

In the storage battery module according to this embodiment, a plurality of storage battery cells are housed in an inner case, and the inner case is housed in an outer case. An inner discharge port is provided in the inner case, and an outer discharge port is provided in the outer case. Further, a discharge path on which the high-temperature high-pressure gas is circulated is provided between the inner case and the outer case. With such a structure, the high-temperature high-pressure gas emitted from the storage battery cell moves inside the inner case and is discharged out of the inner case from the inner discharge port. The high-temperature high-pressure gas discharged outside the inner case passes through the discharge path and is discharged out of the outer case from the outer discharge port. As a result, the path on which the high-temperature high-pressure gas travels in the storage battery module is extended, and the area of contact between the outer case/inner case and the high-temperature, high-pressure gas is increased. This cools the high-temperature high-pressure gas in the storage battery module. The terms "parallel" and "perpendicular" in the following description not only encompass completely parallel or perpendicular but also encompass slightly off-parallel and off-vertical within the margin of error. The term "substantially" means identical within certain limits.

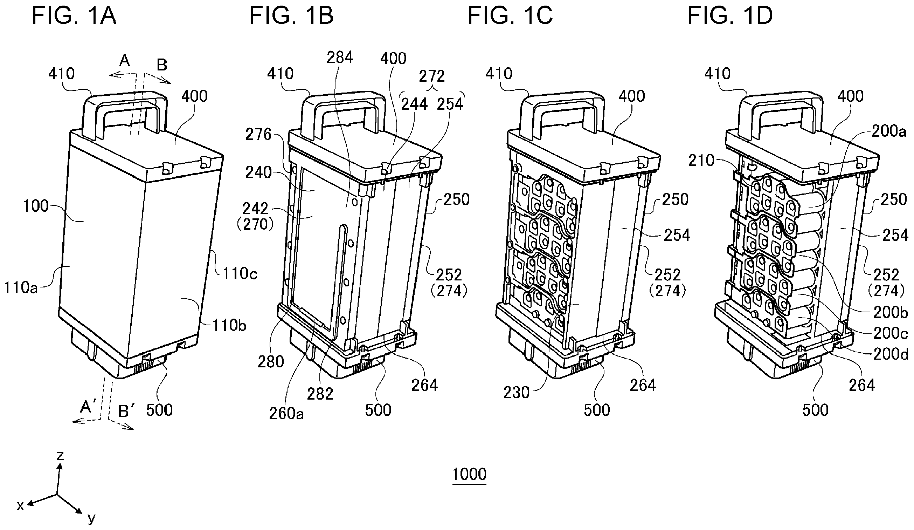

Figs. 1A-1D are perspective views showing a structure of a storage battery module 1000. As shown in Figs. 1A-1D, an orthogonal coordinate system including an x axis, y axis, and a z axis is defined. The x axis and y axis are orthogonal to each other in the bottom plane of the storage battery module 1000. The z axis is perpendicular to the x axis and y axis and extends in the height (vertical) direction of the storage battery module 1000. The positive directions of the x axis, y axis, and z axis are defined in the directions of arrows in Figs. 1A-1D, and the negative directions are defined in the directions opposite to those of the arrows. Further, the positive direction side along the x axis may be referred to as "forward" or "frontward", the negative direction side along the x axis may be referred to as "behind" or "rearward", the positive direction side along the z axis may be referred to as "upward" or "toward the top", and the negative direction side along the z axis may be referred to as "downward" or "toward the bottom". Further, the positive direction side along the y axis may be referred to as "rightward", and the negative direction side along the y axis may be referred to as "leftward".

Fig. 1A shows an appearance of a storage battery module 1000. The storage battery module 1000 includes an outer case 100, an upper case 400, and a lower case 500. Like the outer case 100, the upper case 400 and the lower case 500 are also exposed outside and so may be included in the outer case 100. The combination of the outer case 100, the upper case 400, and the lower case 500 have a box shape elongated in the vertical direction. The outer case 100 includes a first outer plate 110a, a second outer plate 110b, a third outer plate 110c, and a fourth outer plate 110d (not shown), which are generically referred to as outer plates 110, and is located on the side surfaces of the box shape. Each outer plate 110 has a shape of a rectangular plate and is made of, for example, metal.

The upper case 400 is connected to the upper side of the outer case 100 and represents the lid part of the outer case 100. An arch-shaped handle 410 projecting upward is provided in the upper case 400. The upper case 400 is made of, for example, resin or metal. The lower case 500 is connected to the lower side of the outer case 100 and represents the bottom part of the outer case 100. The lower case 500 has a shape projecting further downward from the outer case 100. The lower case 500 is made of, for example, resin.

Fig. 1B shows a structure revealed when the outer case 100 of Fig. 1A is removed. A front case 240 and a rear case 250 are provided inside the outer case 100. The front case 240 includes a front case front surface 242 and a front case side surface 244. The front case front surface 242 has a shape of a rectangular plate extending on the x-y plane, and the front case side surface 244 has a shape of a rectangular plate extending on the z-x plane. The front case side surface 244 is provided to extend rearward from the right side end of the front case front surface 242. The rear case 250 includes a rear case rear surface 252 and a rear case side surface 254. The rear case rear surface 252 has a shape of a rectangular plate extending on the x-y plane, and the rear case side surface 254 has a shape of a rectangular plate extending on the z-x plane. The rear case side surface 254 is provided to extend frontward from the right side end of the rear case rear surface 252.

The front case side surface 244 and the rear case side surface 254 are connected such that the rear end of the front case side surface 244 and the front end of the rear case side surface 254 are in contact. As a result, the front case side surface 244 and the rear case side surface 254 form a single surface, and the surface is referred to as a second surface 272. In association with the second surface 272, the front case front surface 242 is referred to as a first surface 270, and the rear case rear surface 252 is referred to as a third surface 274. The first surface 270 faces the first outer plate 110a of the outer case 100. The second surface 272 faces the second outer plate 110b of the outer case 100 and is adjacent to the first surface 270. Further, the third surface 274 faces the third outer plate 110c of the outer case 100, is adjacent to the second surface 272, and faces a direction opposite to the first surface 270. In other words, the combination of the front case 240 and the rear case 250 has three rectangular surfaces. The front case 240 and the rear case 250 are made of, for example, metal. The detail of the structure in the front case 240 and the rear case 250 will be described in detail later.

Fig. 1C shows a structure revealed when the front case 240 of Fig. 1B is removed. A battery holder 230 is provided inside the front case 240 and the rear case 250. The battery holder 230 has a box shape elongated in the vertical direction. The battery holder 230 is made of an insulative material such as resin. Fig. 1D shows a structure revealed when the battery holder 230 of Fig. 1C is removed. A first storage battery assembly 200a, a second storage battery assembly 200b, a third storage battery assembly 200c, and a fourth storage battery assembly 200d, which are generically referred to as storage battery assemblies 200, are arranged in the vertical direction inside the battery holder 230. Eight storage battery cells 210 are included in each storge battery assembly 200. The number of storage battery assemblies 200 is not limited to "4", and the number of storage battery cells 210 included in one storage battery assembly 200 is not limited to "8".

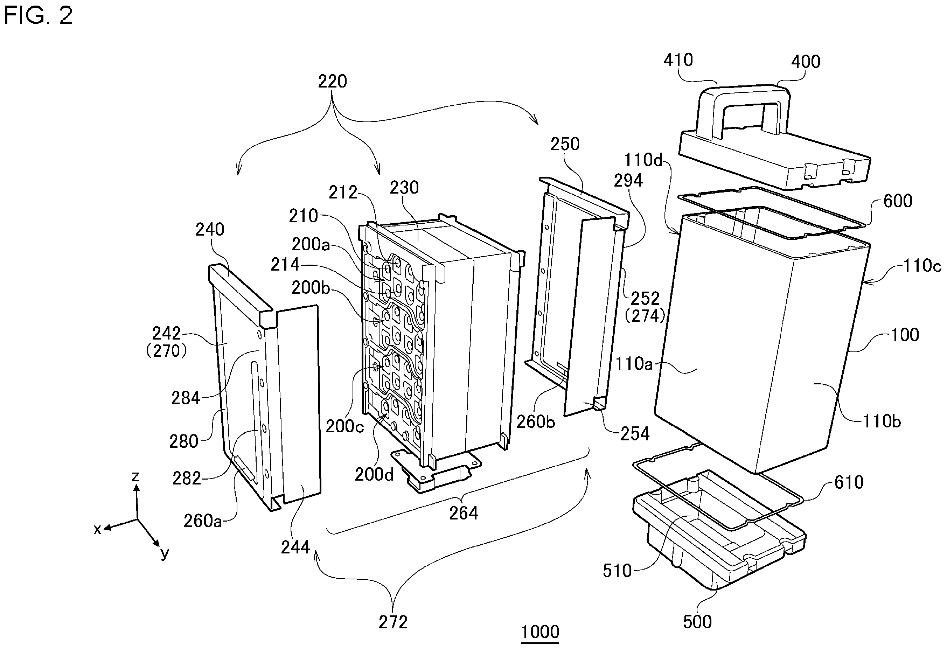

Fig. 2 is an exploded perspective view showing a structure of the storage battery module 1000. The storage battery module 1000 includes an outer case 100, a battery holder 230, a front case 240, a rear case 250, an upper case 400, a lower case 500, an upper packing 600, and a lower packing 610. These constituting elements are connected by screws, welding, adhesive materials, etc. A publicly known technology may be used so that a description thereof is omitted.

As described above, the battery holder 230 has a box shape elongated in the vertical direction and houses the first storage battery assembly 200a through the fourth storage battery assembly 200d. Each storage battery assembly 200 includes a plurality of storage battery cells 210. The storage battery cell 210 is, for example, a lithium ion secondary battery having a columnar shape. An anode 212 and a cathode 214 facing opposite directions are provided at the ends of columnar shape of the storage battery cell 210. A publicly known technology may be used for the storage battery cell 210. A safety mechanism for discharging a high-temperature high-pressure gas outside when the internal pressure rises due to the occurrence of internal short-circuit, etc. Generally, the high-temperature high-pressure gas is discharged from the anode 212. Some of the plurality of storage battery cells 210 are provided such that the anode 212 faces frontward, and the rest of the storage battery cells 210 are provided such that the cathode 214 faces frontward. The former represents arranging the anode 212 to face the first surface 270, and the latter represents arranging the cathode 214 to face the first surface 270. For example, the number of storage battery cells 210 arranged in the former manner and the number of storage battery cells 210 arranged in the latter manner are identical.

The front surface and a portion of the right surface of the battery holder 230 are covered by the front case 240, and the rear surface and the remaining portion of the right surface of the battery holder 230 are covered by the rear case 250. The combination of the battery holder 230, the front case 240, and the rear case 250 is an inner case 220, and the inner case 220 houses a plurality of storage battery cells 210 inside.

A left side wall 280 extending in the vertical direction is provided at the left edge of the first surface 270 of the front case 240. The left side wall 280 projects frontward to be in contact with the first outer plate 110a of the outer case 100. A right side wall 282 extending in the vertical direction is provided at the right edge of the first surface 270 of the front case 240. The right side wall 282 also projects frontward to be in contact with the first outer plate 110a of the outer case 100. The left side wall 280 extends across substantially the entirety of the first surface 270 in the vertical direction, but the right side wall 282 extends in a length shorter than the left side wall 280, and a passage groove 284 is provided above the right side wall 282. The passage groove 284 connects the first surface 270 and the second surface 272 continuously. A first inner discharge port 260a extending in the horizontal direction is provided on the lower side of the area of the first surface 270 sandwiched by the left side wall 280 and the right side wall 282. The first inner discharge port 260a extends through the first surface 270.

Meanwhile, the third surface 274 of the rear case 250 has a structure similar to that of the first surface 270. Therefore, like the passage groove 284 in the first surface 270, a passage groove 294 is provided in the third surface 274. The passage groove 294 connects the third surface 274 and the second surface 272 continuously. In association with the first inner discharge port 260a in the first surface 270, a second inner discharge port 260b extending in the horizontal direction is provided in the lower part of the third surface 274. The second inner discharge port 260b extends through the third surface 274.

Further, as also shown in Fig. 1B, an intermediate discharge port 264 extending in the horizontal direction is provided in the lower part of the second surface 272. The intermediate discharge port 264 opens to be connected to an extended space 510 provided inside the lower case 500. The extended space 510 is a space that opens upward. The opening of the extended space 510 is blocked by the battery holder 230, the front case 240, and the rear case 250 outside the portion connected to the intermediate discharge port 264. Further, the extended space 510 is connected to an outer discharge port (not shown) provided in the lower case 500. The lower case 500 is connected to the outer case 100 via the lower packing 610, and the outer case 100 is connected to the upper case 400 via the upper packing 600. In this way, the outer case 100 houses the battery holder 230, the front case 240, and the rear case 250.

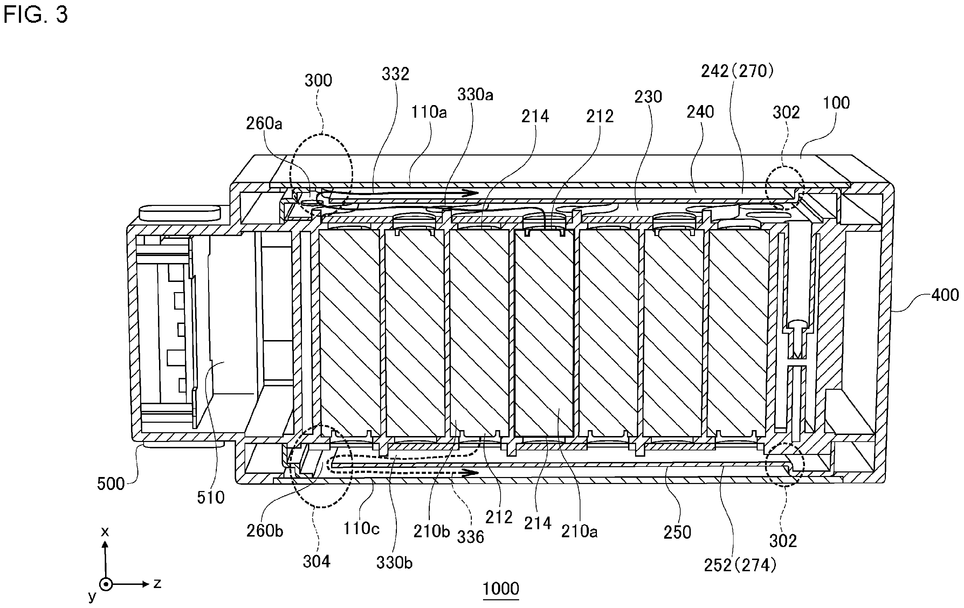

A description will now be given of a path on which a high-temperature high-pressure gas emitted from the storage battery cell 210 when the storage battery cell 210 undergoes thermal runaway is discharged from the storage battery module 1000. Fig. 3 is a cross-sectional view showing a structure of the storage battery module 1000 and is an A-A' cross-sectional view of Fig. 1A. As described above, a plurality of storage battery cells 210 are arranged in the battery holder 230, and one of the cells is shown as a first storage battery cell 210a. The first storage battery cell 210a is provided such that the anode 212 faces frontward, and the cathode 214 faces rearward.

In the case the first storage battery cell 210a undergoes thermal runaway, the first storage battery cell 210a emits a high-temperature high-pressure gas from the anode 212. The space between the battery holder 230 and the first surface 270 opens in the first inner discharge port 260a so that the high-temperature high-pressure gas is guided to the first inner discharge port 260a as it comes into contact with the first surface 270. As the high-temperature high-pressure gas comes into contact with the first surface 270, the temperature of the high-temperature high-pressure gas is reduced. The path from the storage battery cell 210 to a first position 300 where the first inner discharge port 260a is provided is referred to as a first inner discharge path 330a.

The high-temperature high-pressure gas is discharged from the first inner discharge port 260a to the space between the first surface 270 and the first outer plate 110a and is guided to a second position 302 as it comes into contact with the first surface 270 and the first outer plate 110a. As the high-temperature high-pressure gas comes into contact the first surface 270 and the first outer plate 110a, the temperature of the high-temperature high-pressure gas is reduced. The second position is a portion connected to the second surface 272 and includes, for example, the passage groove 284 and the passage groove 294. The path from the first position 300 to the second position 302 is referred to as a first discharge path 332. In other words, the first discharge path 332 includes the first inner discharge port 260a and is formed on the first surface 270.

The storage battery cell 210 adjacent to the first storage battery cell 210a is shown as a second storage battery cell 210b. The second storage battery cell 210b is provided such that the anode 212 faces rearward, and the cathode 214 faces frontward. In the case the second storage battery cell 210b undergoes thermal runaway, the second storage battery cell 210b emits a high-temperature high-pressure gas from the anode 212. The space between the battery holder 230 and the third surface 274 opens in the second inner discharge port 260b so that the high-temperature high-pressure gas is guided to the second inner discharge port 260b as it comes into contact with the third surface 274. As the high-temperature high-pressure gas comes into contact with the third surface 274, the temperature of the high-temperature high-pressure gas is reduced. The path from the storage battery cell 210 to a third position 304 where the second inner discharge port 260b is provided is referred to as a second inner discharge path 330b.

The high-temperature high-pressure gas is discharged from the second inner discharge port 260b to the space between the third surface 274 and the third outer plate 110c and is guided to the second position 302 as it comes into contact with the third surface 274 and the third outer plate 110c. As the high-temperature high-pressure gas comes into contact with the third surface 274 and the third outer plate 110c, the temperature of the high-temperature high-pressure gas is reduced. The path from the third position 304 to the second position 302 is referred to as a third discharge path 336. In other words, the third discharge path 336 includes the second inner discharge port 260b and is formed on the third surface 274.

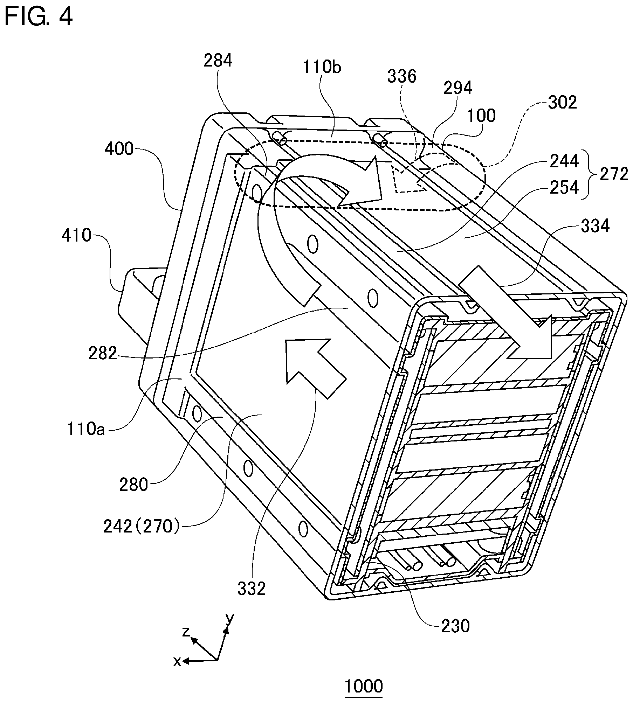

Fig. 4 is a partial perspective view showing a structure of the storage battery module 1000 and shows the upper part of the storage battery module 1000. The high-temperature high-pressure gas traveling along the first discharge path 332 moves from the passage groove 284 to the second surface 272. Meanwhile, the high-temperature high-pressure gas traveling along the third discharge path 336 moves from the passage groove 294 to the second surface 272. The part including the passage groove 284 and the passage groove 294 is shown, as described above, as the second position 302, and the high-temperature high-pressure gas moves from the second position 302 as it comes into contact with the second surface 272 and the second outer plate 110b. As the high-temperature high-pressure gas comes into contact with the second surface 272 and the second outer plate 110b, the temperature of the high-temperature high-pressure gas is reduced. The path from the second position 302 is referred to as a second discharge path 334. In other words, the second discharge path 334 is formed on the second surface 272.

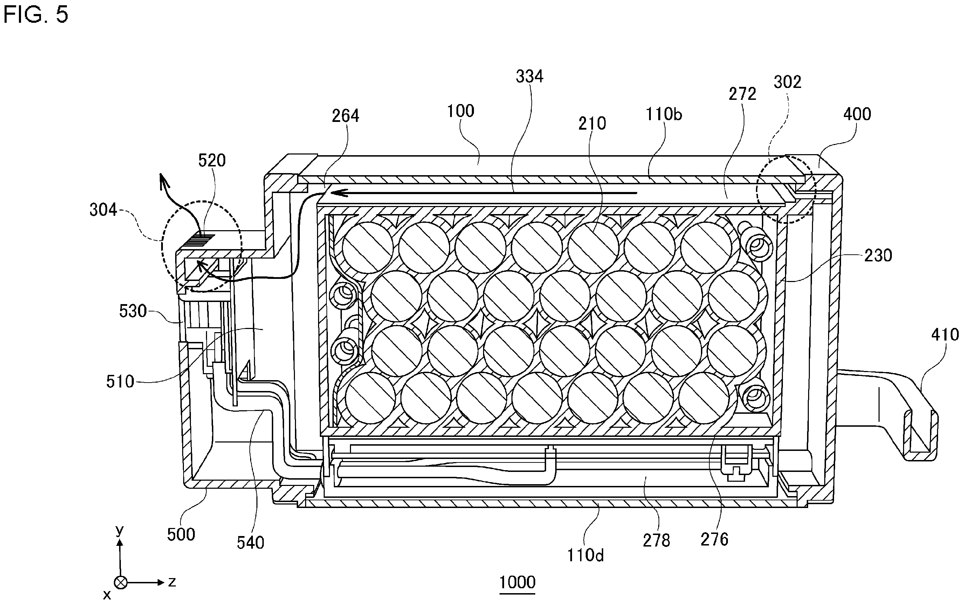

Fig. 5 is another cross-sectional view showing a structure of the storage battery module 1000 and is a B-B' cross-sectional view of Fig. 1A. The high-temperature high-pressure gas from the second position 302 travels to the intermediate discharge port 264 as it comes into contact with the second surface 272 and the second outer plate 110b and is discharged from the intermediate discharge port 264 to the extended space 510. The extended space 510 is larger than the inner discharge path 330, the first discharge path 332 and is larger than the second discharge path 334 and the third discharge path 336 leading to the extended space 510. As the high-temperature high-pressure gas enters the extended space 510, the pressure of the high-temperature high-pressure gas is reduced, and the temperature of the high-temperature high-pressure gas is reduced. Further, an outer discharge port 520 connected to the extended space 510 is provided in the lower part of the lower case 500. The outer discharge port 520 extends through the lower case 500. The high-temperature high-pressure gas in the extended space 510 is discharged outside from the outer discharge port 520. The path from the second position 302 to the third position 304 where the outer discharge port 520 is located is the second discharge path 334.

The rear surface of the battery holder 230 is shown as a fourth surface 276. The fourth surface 276 faces the fourth outer plate 110d of the outer case 100, is adjacent to the first surface 270 and the third surface 274, and faces a direction opposite to the second surface 272. The left side wall 280, etc. provided on the first surface 270 prevents the high-temperature high-pressure gas from entering the space between the fourth surface 276 and the fourth outer plate 110d. Therefore, the temperature in the space between the fourth surface 276 and the fourth outer plate 110d is not raised easily by the high-temperature high-pressure gas. A control circuit 278 is provided on the fourth surface 276. The control circuit 278 is, for example, a circuit for controlling charging or discharging in the storage battery module 1000. A connection terminal 530 is provided in the neighborhood of the outer discharge port 520 in the lower part of the lower case 500. The connection terminal 530 is a part connected to a charging table (not shown) to charge the storage battery module 1000. The connection terminal 530 and the storage battery cell 210 are connected by a cable 540.

According to this embodiment, the high-temperature high-pressure gas emitted from the storage battery cell 210 is discharged from the outer discharge port 520 via the first discharge path 332 and the second discharge path 334. Therefore, the path on which the high-temperature high-pressure gas travels in the storage battery module 1000 can be extended. Since the path on which the high-temperature high-pressure gas travels in the storage battery module 1000 is extended, the high-temperature high-pressure gas can be cooled. Since the high-temperature high-pressure gas is cooled, the high-temperature high-pressure gas emitted from a battery undergoing thermal runaway can be inhibited from from being discharged outside. Since the first discharge path 332 is formed on the first surface 270 in the inner case 220 and the second discharge path 334 is formed on the second surface 272, the first discharge path 332 and the second discharge path 334 can be arranged in a streamlined fashion. Since the first discharge path 332 and the second discharge path 334 can be arranged in a streamlined fashion, the size of the storage battery module 1000 can be reduced.

Since the second discharge path 334 passes through the extended space 510 provided between the second surface 272 and the outer discharge port 520, the pressure of the high-temperature high-pressure gas can be reduced. Since the pressure of the high-temperature high-pressure gas is reduced, the high-temperature high-pressure gas can be cooled. Further, the storage battery cell 210 with the anode 212 facing the first surface 270 and the storage battery cell 210 with the anode 212 faces the third surface 274 can be arranged. Since the fourth surface 276 is provided separately from the first surface 270 through the third surface 274, the impact of the high-temperature high-pressure gas can be reduced on the fourth surface 276. Since the impact of the high-temperature high-pressure gas can be reduced on the fourth surface 276, the temperature of the control circuit 278 is inhibited from rising. Since the control circuit 278 is provided on the fourth surface 276, the arrangement can be streamlined. Since the arrangement can be streamlined, the size of the storage battery module 1000 can be reduced.

A summary of an embodiment of the present disclosure is given below. A storage battery module (1000, 2000) according to an embodiment of the present disclosure includes: a plurality of storage battery cells (210, 2210); an inner case (220, 2220) that houses the plurality of storage battery cells (210, 2210); and an outer case (100, 2100) that houses the inner case (220, 2220). An inner discharge port (260, 2260) is provided in the inner case (220, 2220), an outer discharge port (520, 2520) is provided in the outer case (100, 2100), and a first discharge path (332, 2332) from a first position (300, 2300) at the inner discharge port (260, 2260) to a second position (302, 2302) and a second discharge path (334, 2334) from the second position (302, 2302) to a third position (304, 2304) at the outer discharge port (520, 2520) are provided in a space between the inner case (220, 2220) and the outer case (100, 2100) .

The inner case (220) may include a first surface (270) facing the outer case (100) and a second surface (272) facing the outer case (100) and adjacent to the first surface (270). The first discharge path (332) is formed on the first surface (270), and the second discharge path (334) is formed on the second surface (272).

The inner discharge port (260) is provided on the first surface (270), the outer discharge port (520) is provided outside the second surface (272), and the second discharge path (334) passes through an extended space (510) provided between the second surface (272) and the outer discharge port (520).

The inner case (220) may further include a third surface (274) that faces the outer case (100), is adjacent to the second surface (272), and faces a direction opposite to the first surface (270). Some of the plurality of storage battery cells (210) may be provided in the inner case (220) such that an anode (212) faces the first surface (270), the rest of the plurality of storage battery cells (210) may be provided in the inner case (220) such that the anode (212) faces the third surface (274), the inner discharge port (260) may include a first inner discharge port (260a) provided on the first surface (270) and a second inner discharge port (260b) provided on the third surface (274). The first discharge path (332) may include the first inner discharge port (260a). A third discharge path (336) for joining the second discharge path (334) leading from the second inner discharge port (260) is provided on the third surface (274) in a space between the inner case (220) and the outer case (100) .

The inner case (220) may further include a fourth surface (276) that faces the outer case (100), is adjacent to the first surface (270) and the third surface (274), and faces a direction opposite to the second surface (272). A control circuit (278) is provided on the fourth surface (276).

### (Embodiment 2)

A description will now be given of embodiment 2. Like embodiment 1, embodiment 2 relates to a storage battery module in which a plurality of storage battery cells are housed. In embodiment 1, the first discharge path and the second discharge path are formed by using different surfaces of the inner case. In embodiment 2, an intermediate case is provided between the outer case and the inner case, the first discharge path is formed between the inner case and the intermediate case, and the second discharge path is formed between the intermediate case and the outer case. The description below highlights a difference from embodiment 1.

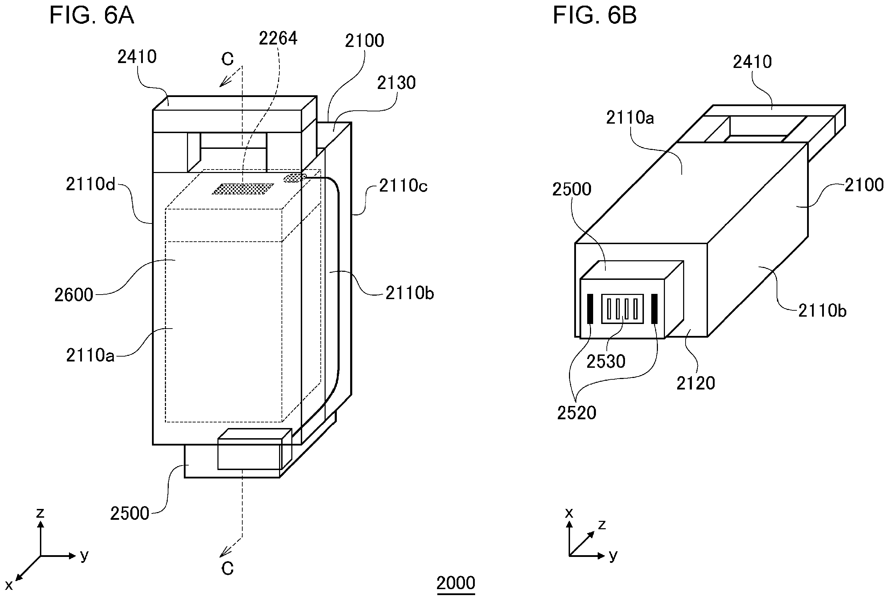

Figs. 6A-6B are perspective views showing a structure of a storage battery module 2000. Fig. 6A shows an appearance of the storage battery module 2000, and Fig. 6B is a perspective view of the storage battery module 2000 from below. The storage battery module 2000 includes an outer case 2100 and a lower case 2500. Like the outer case 2100, the lower case 2500 is also exposed outside and so may be included in the outer case 2100. The outer case 2100 has a shape of a box elongated in the vertical direction. The outer case 2100 includes a first outer plate 2110a, a second outer plate 2110b, a third outer plate 2110c, and a fourth outer plate 2110d, which are generically referred to as outer plates 2110, an outer case lower surface 2120, and an outer case upper surface 2130. Each outer plate 2110, the outer case lower surface 2120, and the outer case upper surface 2130 have a shape of a rectangular plate and are made of, for example, metal.

An arch-shaped handle 2410 projecting upward is provided on the outer case upper surface 2130. The lower case 2500 has a shape of a box and is connected to the outer case lower surface 2120 of the outer case 2100. A connection terminal 2530 is provided on the bottom surface of the lower case 2500, and two outer discharge ports 2520 are provided to sandwich the connection terminal 2530. The connection terminal 2530 and the outer discharge port 2520 correspond to the connection terminal 530 and the outer discharge port 520 of embodiment 1. The lower case 2500 is made of, for example, resin.

Fig. 6A shows the interior of the outer case 2100 transparently. An intermediate case 2600 is provided in the outer case 2100. Like the outer case 2100, the intermediate case 2600 has a shape of a box elongated in the vertical direction and is made of, for example, metal. The structure of the outer case 2100 will be described later.

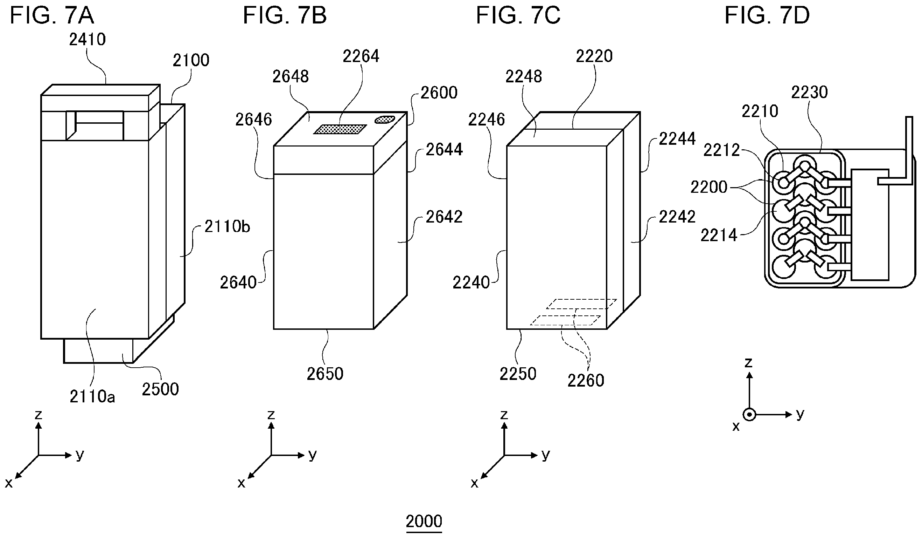

Figs. 7A-7D are further perspective views showing a structure of the storage battery module 2000. Fig. 7A shows the structure of the outer case 2100 and the lower case 2500, and shows a structure similar to that of Fig. 1A. Fig. 7b shows a structure of the intermediate case 2600 housed in the outer case 2100. The intermediate case 2600 includes an intermediate case front surface 2640, an intermediate case right surface 2642, an intermediate case rear surface 2644, an intermediate case left surface 2646, an intermediate case upper surface 2648, and an intermediate case lower surface 2650. These parts have a shape of a rectangular plate and are made of, for example, metal. A rectangular intermediate discharge port 2264 is provided on the intermediate case upper surface 2648. The intermediate discharge port 2264 extends through the intermediate case upper surface 2648.

Fig. 7C shows a structure of an inner case 2220 housed in the intermediate case 2600. The inner case includes an inner case 2220 front surface 2240, an inner case right surface 2242, an inner case rear surface 2244, an inner case left surface 2246, an inner case upper surface 2248, and an inner case lower surface 2250. These parts have a shape of a rectangular plate and are made of, for example, metal. Two rectangular inner discharge ports 2260 are provided on the inner case lower surface 2250. The inner discharge port 2260 corresponds to the inner discharge port 260 of embodiment 1 and extends through the inner case lower surface 2250.

Fig. 7D shows a structure of a battery holder 2230 housed in the inner case 2220. A plurality of storage battery assemblies 2200 are housed in the battery holder 2230, and each storage battery assembly 2200 includes a plurality of storage battery cells 2210. Some of the plurality of storage battery cells 2210 have an anode 2212 facing frontward, and the resto of the plurality of storage battery cells 2210 have a cathode 2214 facing frontward. The storage battery assembly 2200, the storage battery cell 2210, the anode 2212, the cathode 2214, and the battery holder 2230 correspond to the storage battery assembly 200, the storage battery cell 210, the anode 212, the cathode 214, and the battery holder 230 of embodiment 1, respectively.

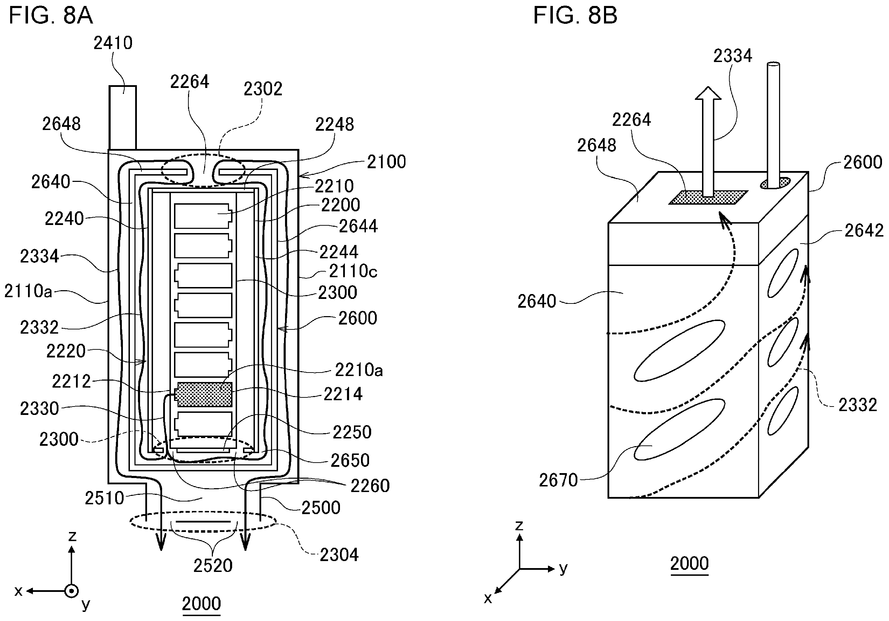

A description will now be given of a path on which a high-temperature high-pressure gas emitted from the storage battery cell 2210 when the storage battery cell 2210 undergoes thermal runaway is discharged from the storage battery module 2000. Figs. 8A-8B show a discharge path of the high-temperature high-pressure gas in the storage battery module 2000. Fig. 8A is a cross-sectional view showing a structure of the storage battery module 2000 and is an C-C' cross-sectional view of Fig. 6A. As described above, a plurality of storage battery cells 2210 are arranged in the battery holder 2230, and one of the cells is shown as a first storage battery cell 2210a. The first storage battery cell 2210a is provided such that the anode 2212 faces frontward, and the cathode 214 faces rearward.

In the case the first storage battery cell 2210a undergoes thermal runaway, the first storage battery cell 2210a emits a high-temperature high-pressure gas from the anode 2212. The space between the battery holder 2230 and the inner case front surface 2240 opens in the inner discharge port 2260 so that the high-temperature high-pressure gas is guided to the inner discharge port 2260 as it comes into contact with the inner case front surface 2240. As the high-temperature high-pressure gas comes into contact with the inner case front surface 2240, the temperature of the high-temperature high-pressure gas is reduced. The path from the storage battery cell 2210 to a first position 2300 where the inner discharge port 2260 is provided is referred to as an inner discharge path 2330.

The high-temperature high-pressure gas is discharged from the inner discharge port 2260 to the space between the inner case front surface 2240 and the intermediate case front surface 2640 and to the space between the inner case rear surface 2244 and the intermediate case rear surface 2644. The high-temperature high-pressure gas is also discharged to the space between the inner case right surface 2242 and the intermediate case right surface 2642 and to the space between the inner case left surface 2246 and the intermediate case left surface 2646, although this is omitted in Figs. 8A-8B. The high-temperature high-pressure gas is guided to the second position 2302 as it comes into contact with the inner case front surface 2240 and then the inner case left surface 2246, and with the intermediate case front surface 2640 and then the intermediate case left surface 2646. An intermediate discharge port 2264 is provided at the second position 2302. As the high-temperature high-pressure gas comes into contact with the inner case front surface 2240 and then the inner case left surface 2246, and with the intermediate case front surface 2640 and then the intermediate case left surface 2646, the temperature of the high-temperature high-pressure gas is reduced. The path from the first position 2300 to the second position 2302 is referred to as a first discharge path 2332. In other words, the first discharge path 2332 includes the inner discharge port 2260 and is formed in the space between the inner case 2220 and the intermediate case 2600.

The high-temperature high-pressure gas is discharged from the intermediate discharge port 2264 to the space between the intermediate case front surface 2640 and the first outer plate 2110a and to the space between the intermediate case rear surface 2644 and the third outer plate 2110c. The high-temperature high-pressure gas is also discharged to the space between the intermediate case right surface 2642 and the second outer plate 2110b and to the space between the intermediate case left surface 2646 and the fourth outer plate 2110d, although this is omitted in Figs. 8A-8B. The high-temperature high-pressure gas is guided to the third position 2304 as it comes into contact with the intermediate case front surface 2640 and then the intermediate case left surface 2646 and with the outer plate 2110. The outer discharge port 2520 is provided at the third position 2304. As the high-temperature high-pressure gas comes into contact with the intermediate case front surface 2640 and then the intermediate case left surface 2646 and with the outer plate 2110, the temperature of the high-temperature high-pressure gas is reduced. The path from the second position 2302 to the third position 2304 is referred to as a second discharge path 2334. In other words, the second discharge path 2334 includes the intermediate discharge port 2264 and the outer discharge port 2520 and is formed in the space between the intermediate case 2600 and the outer case 2100. Further, the second discharge path 2334 passes through an extended space 2510 provided between the space and the outer discharge port 2520. The extended space 2510 corresponds to the extended space 510 of embodiment 1. As the high-temperature high-pressure gas enters the extended space 2510, the pressure of the high-temperature high-pressure gas is reduced, and the temperature of the high-temperature high-pressure gas is reduced.

Fig. 8B shows a variation of the intermediate case 2600. A plurality of projections 2670 projecting inward are provided in the intermediate case 2600. In the presence of the plurality of projections 2670, the space between the inner case 2220 and the intermediate case 2600 forms a spiral shape of the first discharge path 2332. As a result, the length of the first discharge path 2332 is extended so that the temperature of the high-temperature high-pressure gas is further reduced.

According to this embodiment, the first discharge path 2332 is formed in the space between the inner case 2220 and the intermediate case 2600, and the second discharge path 2234 is formed in the space between the intermediate case 2600 and the outer case 2100. Therefore, the path on which the high-temperature high-pressure gas travels can be extended. Since the path on which the high-temperature high-pressure gas travels in the storage battery module 1000 is extended, the high-temperature high-pressure gas can be cooled. Since the high-temperature high-pressure gas is cooled, the high-temperature high-pressure gas emitted from a battery undergoing thermal runaway can be inhibited from from being discharged outside. Since the second discharge path 2334 passes through the extended space 2510 provided between a) the space between the intermediate case 2600 and the outer case 2100 and b) the outer discharge port 2520, the pressure of the high-temperature high-pressure gas can be reduced. Since the pressure of the high-temperature high-pressure gas is reduced, the high-temperature high-pressure gas can be cooled.

A summary of an embodiment of the present disclosure is given below. The storage battery module may further include an intermediate case (2600) housing the inner case (2220) and housed in the outer case (2100). An intermediate discharge port (2264) is provided at the second position (2302) of the intermediate case (2600), the first discharge path (2332) is formed in a space between the inner case (2220) and the intermediate case (2600), and the second discharge path (2334) is formed in a space between the intermediate case (2600) and the outer case (2100).

The second discharge path (2334) passes through an extended space (2510) provided between a) a space between the intermediate case (2600) and the outer case (2100) and b) the outer discharge port (2520).

### (Embodiment 3)

A description will now be given of embodiment 3. Like the foregoing embodiments, embodiment 3 relates to a storage battery module in which a plurality of storage battery cells are housed. In embodiments 1, 2, the outer case made of metal is provided in the outermost part of the storage battery module. In embodiment 3, a resin cover is provided outside the outer case for the purpose of increasing the flexibility of a structure for attaching a charger or a load apparatus to the storage battery module, and improving the design of the storage battery module. The description below highlights a difference from embodiment 1.

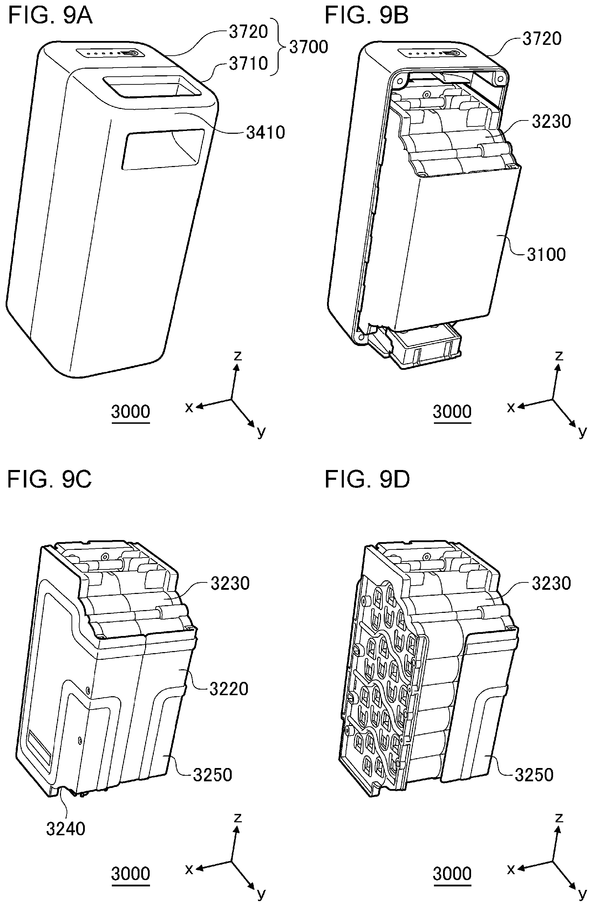

Figs. 9A-9D are perspective views showing a structure of a storage battery module 3000. In Figs. 9A-9D, an orthogonal coordinate system like the ones above is defined. Fig. 9A shows an appearance of the storage battery module 3000. The storage battery module 3000 includes a resin cover 3700. The resin cover 3700 is made of resin and has a shape of a box elongated in the vertical direction when a first resin cover 3710 and a second resin cover 3720 are combined. Further, a rod-shaped handle 3410 is provided in the first resin cover 3710. Thus, the appearance of the storage battery module 3000 is mainly produced by resin.

Fig. 9B shows a structure revealed when the first resin cover 3710 of Fig. 9A is removed. An outer case 3100 and a battery holder 3230 are provided inside the resin cover 3700. The outer case 3100 has a structure similar to that of the outer case 100 of embodiment 1 so that a description thereof is omitted. Alternatively, the outer case 3100 may have a structure similar to that of the outer case 2100 of embodiment 2. In the resin cover 3700 of Fig. 9A, a discharge port (not shown) is provided in the neighborhood of the outer discharge port 520 of embodiment 1 or the outer discharge port 2520 of embodiment 2.

Fig. 9C shows a structure revealed when the second resin cover 3720 and the outer case 3100 of Fig. 9B are removed. The battery holder 3230, a front case 3240, and a rear case 3250 are provided inside the outer case 3100. The combination of the battery holder 3230, the front case 3240, and the rear case 3250 is an inner case 3220. The inner case 3220, the battery holder 3230, the front case 3240, and the rear case 3250 have a structure similar to that of the inner case 220, the battery holder 230, the front case 240, and the rear case 250 of embodiment 1 so that a description thereof is omitted. Alternatively, the inner case 3220 may have a structure similar to that of the inner case 2220 and the intermediate case 2600 of embodiment 2.

Fig. 9C shows a structure revealed when the front case 3240 of Fig. 9C is removed. The battery holder 3230 is provided inside the front case 3240 and the rear case 3250. As described above, the battery holder 3230 has a structure similar to that of the battery holder 230 of embodiment 1 but may have a structure similar to that of the battery holder 2230 of embodiment 2.

According to this embodiment, the resin cover 3700 is provided in the outermost part so that the flexibility of a structure for attaching a charger or a load apparatus to the storage battery module 3000 can be increased. Since the resin cover 3700 is provided in the outermost part, the flexibility of the design of the storage battery module 3000 is also increased. Since the flexibility of the design of the storage battery module 3000 is increased, the design of the storage battery module 3000 is improved.

Given above is a description of the present disclosure based on an exemplary embodiment. The embodiment is intended to be illustrative only and it will be understood by those skilled in the art that various modifications to constituting elements and processes could be developed and that such modifications are also within the scope of the present disclosure.

In the embodiments, the plurality of storage battery cells 210 or the plurality of storage battery cells 2210 are arranged to face two types of directions. Alternatively, however, the plurality of storage battery cells 210 or the plurality of storage battery cells 2210 may be arranged to face the same direction. According to this variation, the flexibility in the configuration is improved.

### [INDUSTRIAL APPLICABILITY]

According to the present disclosure, the high-temperature high-pressure gas emitted from a battery undergoing thermal runaway is inhibited from being discharged outside.

### [REFERENCE SIGNS LIST]

100 outer case, 110 outer plate, 200 storage battery assembly, 210 storage battery cell, 212 anode, 214 cathode, 220 inner case, 230 battery holder, 240 front case, 242 front case front surface, 244 front case side surface, 250 rear case, 252 rear case rear surface, 254 rear case side surface, 260 inner discharge port, 264 intermediate discharge port, 270 first surface, 272 second surface, 274 third surface, 276 fourth surface, 278 control circuit, 280 left side wall, 282 right side wall, 284, 294 passage groove, 300 first position, 302 second position, 304 third position, 330 inner discharge port 332, first discharge path, 334 second discharge path, 336 third discharge path, 400 upper case, 410 handle, 500 lower case, 510 extended space, 520 outer discharge port, 530 connection terminal, 540 cable, 600 upper packing, 610 lower packing, 1000 storage battery module

## Claims

1. A storage battery module comprising:
a plurality of storage battery cells;
an inner case that houses the plurality of storage battery cells; and
an outer case that houses the inner case, wherein
an inner discharge port is provided in the inner case,
an outer discharge port is provided in the outer case, and
a first discharge path from a first position at the inner discharge port to a second position and a second discharge path from the second position to a third position at the outer discharge port are provided in a space between the inner case and the outer case.

2. The storage battery module according to claim 1, wherein
the inner case includes a first surface facing the outer case and a second surface facing the outer case and adjacent to the first surface,
the first discharge path is formed on the first surface, and
the second discharge path is formed on the second surface.

3. The storage battery module according to claim 2, wherein
the inner discharge port is provided on the first surface,
the outer discharge port is provided outside the second surface, and
the second discharge path passes through an extended space provided between the second surface and the outer discharge port.

4. The storage battery module according to claim 2 or 3, wherein
the inner case further includes a third surface that faces the outer case, is adjacent to the second surface, and faces a direction opposite to the first surface,
some of the plurality of storage battery cells are provided in the inner case such that an anode faces the first surface,
the rest of the plurality of storage battery cells are provided in the inner case such that the anode faces the third surface,
the inner discharge port includes a first inner discharge port provided on the first surface and a second inner discharge port provided on the third surface,
the first discharge path includes the first inner discharge port, and
a third discharge path for joining the second discharge path leading from the second inner discharge port is provided on the third surface in a space between the inner case and the outer case.

5. The storage battery module according to claim 4, wherein
the inner case further includes a fourth surface that faces the outer case, is adjacent to the first surface and the third surface, and faces a direction opposite to the second surface, and a control circuit is provided on the fourth surface.

6. The storage battery module according to claim 1, further comprising:
an intermediate case housing the inner case and housed in the outer case, wherein
an intermediate discharge port is provided at the second position of the intermediate case,
the first discharge path is formed in a space between the inner case and the intermediate case, and
the second discharge path is formed in a space between the intermediate case and the outer case.

7. The storage battery module according to claim 6, wherein
the second discharge path passes through an extended space provided between a) a space between the intermediate case and the outer case and b) the outer discharge port.
